# EUROPÄISCHE PATENTSCHRIFT

(11) **EP 2 460 212 B1**
(45) Veröffentlichungstag und Bekanntmachung des Hinweises auf die Patenterteilung: **25.09.2013**
(21) Anmeldenummer: 10740151.5
(22) Anmeldetag: 07.07.2010
(51) Int. Cl.: H01M 2/20, H05K 3/32

(54) **ANORDNUNG ZUM ANSCHLIESSEN VON ELEKTRISCHEN LEITERBAHNEN AN POLANSCHLÜSSE VON ZUSAMMENGESCHALTETEN ZELLEN**
ARRANGEMENT FOR CONNECTING ELECTRICAL CONDUCTORS TO TERMINAL CONNECTIONS OF INTERCONNECTED CELLS
SYSTÈME POUR RACCORDER DES PISTES CONDUCTRICES ÉLECTRIQUES À DES BORNES POLAIRES D'ÉLÉMENTS INTERCONNECTÉS

(30) Priorität: 25.07.2009 DE 102009034786; 16.09.2009 DE 102009041738
(43) Veröffentlichungstag der Anmeldung: 06.06.2012
(73) Patentinhaber: Zehdenick Innovative Metall- Und Kunststofftechnik GmbH, 16792 Zehdenick (DE)
(72) Erfinder: WARMUTH, Frank, 14822 Borkheide (DE); SCHMIDT, Andre, 16792 Zehdenick (DE); SCHMIEDEL, Thomas, 16792 Zehdenick (DE); WARSINKE, Ronny, 16792 Zehdenick (DE)
(74) Vertreter: Diehl Patentabteilung
(86) Internationale Anmeldenummer: PCT/EP2010/004139
(87) Internationale Veröffentlichungsnummer: WO 2011/012215

(56) Entgegenhaltungen:
- WO-A1-2007/033689
- DE-A1- 10 134 143
- GB-A- 2 330 252
- US-A1- 2006 292 419

## Beschreibung

Die Erfindung betrifft eine Anordnung gemäß dem Oberbegriff des Hauptanspruches.

Eine derartige Anschluss-Anordnung ist aus der DE 1 98 10 746 B4 bei Akkumulatoren für die elektromotorische Traktion bekannt. Diese Anordnung besteht dort aus einer Schaltungsplatine, deren Leiterbahnen bei Platinenbohrungen kontaktgebend auf die in einer Ebene endenden Polanschlüsse einer Mehrzahl von Zellen gelegt werden, ehe ebenfalls durchbohrte Hochstrom-Zellenverbinder darüber gesetzt werden, mittels derer die Zellen dann zum Zellenpack des Akkumulators zusammengeschaltet sind. Diese zweilagige Anordnung aus Zellenverbinder und darunter eingespannter Schaltungsplatine wird mittels Schrauben fixiert, welche deren Löcher durchgreifend in Innengewinde der Polanschlüsse eingeschraubt werden. Die auf der Schaltungsplatine ausgebildeten Leiterbahnen führen von den längs des Randes der Platine gelegenen Polanschlüssen zum mittleren Bereich der Platine, der mit einer Schaltung für ein Batteriemanagement bestückt ist, und zu Shunts für einen Abgleich der Ladezustände der einzelnen Zellen untereinander sowie zu Vielfachsteckern als Datenschnittstellen. Weil die Platine dadurch einerseits jeweils zwischen den massiven Zellenverbindern und den Polanschlüssen bei vielfach überbestimmter Lagerung starr verschraubt ist, während andererseits betriebsbedingt Erschütterungen und temperaturabhängige Kräfte von den Polanschlüssen über die Platine auf die Zellenverbinder einwirken, wird für die Platine ein flexibles Material gewählt. Das beschwört aber die Gefahr von Brüchen der Leiterbahnen gerade in unmittelbarer Nachbarschaft der Polverschraubungen und somit des Ausfalles des gesamten Zellenpacks eines solchen Traktions-Akkumulators wegen nicht mehr funktionstüchtigen Batteriemanagements herauf.

Weitere Zellverbindungssysteme zur Verbindung von Zellen von Akkumulatoren sind beispielsweise aus den Dokumenten GB 2 330 252 A, US 2006/0292419 A1, WO 2007/033689 A1 und DE 101 34 143 A1 bekannt, die allesamt jeweils spezielle Lösungen zur leistungs- und/oder signalseitigen Verschaltung von Batteriezellen darstellen.

In Erkenntnis dieser Gegebenheiten liegt vorliegender Erfindung die technische Problemstellung zugrunde, eine bei einfach zu handhabender Polanschlusstechnologie betriebsunabhängig zuverlässige Anschlussanordnung insbesondere für das Batteriemanagement anzugeben.

Diese Aufgabe ist nach vorliegender Erfindung gemäß den Merkmalen des Hauptanspruches gelöst. Danach ist die Platine von den Polanschlüssen und damit von den Zellen mechanisch entkoppelt, indem die Platine nicht mehr an den Polanschlüssen, sondern auf einem Teil eines die Zellen aufnehmenden Akkumulator-Gehäuses mechanisch festgelegt ist. Dann greift ein zunächst nur auf den Polanschlüssen positionierter und später, dann ohne Einspannen der Platine, mit jenen zu verschraubender Zellenverbinder vorzugsweise mit einem aus seiner Ebene abgewinkelt verlaufenden hier so genannten Rüssel (oder alternativ mit einem senkrecht zu seiner Ebene an ihm angeformten Dorn) nachgiebig in eine umspritzte Stanzgitterstruktur der auf dem Akkumulator-Gehäuse festgelegten Platine kontaktgebend ein.

Dazu ragen in eine Aussparung in der Kunststoff-Umhüllung wenigstens zwei am Stanzgitter freigeschnittene Laschen stirnseitig aufeinander zu weisend geringfügig federnd hinein. Beim Aufdrücken des Zellenverbinders auf die Polanschlüsse senkt sich der aus der Ebene des Zellenverbinders abgewinkelte Rüssel in die Aussparung und darin zwischen die Stirnränder der Laschen, die dadurch geringfügig in Eintauchrichtung ausbiegen und so den Rüssel, kraftschlüssig gegen Zurückgleiten gesichert, festklemmen. Dadurch ist der Zellenverbinder zur abschließenden Verschraubung auf seinen Polanschlüssen vormontiert und zugleich bereits an die elektrische Leiterbahnenstruktur des Stanzgitters angeschlossen.

Zweckmäßigerweise sind weitere am Stanzgitter freigeschnittene Laschen, mit ihren Stirnenden durch Öffnungen in der Umhüllung hervorragend, aus der Ebene des Stanzgitters herausgebogen, so dass an sie, und damit an die Leiterbahnenstruktur der Platine in Form des umspritzten Stanzgitters, Bauelemente wie Messwiderstände für das Batteriemanagement und insbesondere Ladungsausgleich-Widerstände angeschlossen werden können. Die für letztere im Vergleich zu bloßen Messdatenpfaden großen erforderlichen Leiterquerschnitte lassen sich ohne weiteres, und problemloser als bei aufkaschierten Leiterbahnen, durch entsprechend angepasste Breiten der Stanzgitterbahnen übereinstimmender Dicke zur Verfügung stellen. Wenn in die Stirnenden solcher Anschlusslaschen etwa v-förmig sich öffnende, sehr spitzwinklige Einschnitte eingestanzt sind, dann lassen sich die Anschlüsse der Widerstände und sonstiger Bauelemente hier, zu lotfreier Bestückung in Richtung des Eingriffes des Rüssels in das Stanzgitter und somit gegen das die Platine abstützende Akkumulator-Gehäuse, handhabungstechnisch einfach unmittelbar einklemmen.

Andere Stirnenden von Stanzgitter-Laschen können filigran schmal endend gestanzt sein, um, vor dem Ausbilden eines Steckerkorbes im Zuge des Umspritzens des Stanzgitters mit seiner Kunststoff-Umhüllung, unmittelbar zu Steckerstiften etwa aus der Ebene des Stanzgitters herausgebogen zu werden. Dadurch brauchen nicht mehr individuelle Stecker für Datenschnittstellen gesondert auf die Platine montiert zu werden. Im Rahmen vorliegender Erfindung muss die Platine nicht unter den Polverbindern angeordnet sein; die Rüssel können durchaus auch zum Eingriff in eine darüber gelegene Platine von ihrem jeweiligen Polverbinder hochragen. Zweckmäßiger ist aber die großflächige Auflage der rückwärtig flachen Stanzgitter-Platine auf dem Akkumulator-Gehäuse unter jeweils radialem Abstand zu den Polanschlüssen, auf die dann die mit ihren Rüsseln lokal in das Stanzgitter der Platine eingreifenden Zellenverbinder aufgeschraubt werden, ohne die Stanzgitter-Umhüllung dabei mechanisch einzuspannen.

Zusätzliche Alternativen und Weiterbildungen der erfindungsgemäßen Lösung ergeben sich aus den weiteren Ansprüchen und, auch unter Berücksichtigung deren Vorteilen, aus nachstehender Beschreibung eines unter Beschränkung auf das Funktionswesentliche nicht ganz maßstabsgerecht vergrößert skizzierten bevorzugten Realisierungsbeispieles zur Erfindung. In der Zeichnung ist eine erfindungsgemäße Anschluss-Anordnung mit dem Eingriff eines Zellenverbinders über seinen Rüssel in das umspritzte Stanzgitter der Platine
- in Fig.1: in abgebrochener Querschnittsdarstellung und
- in Fig.2: in abgebrochener Schrägansicht gegen ein platinenseitig bestücktes Gehäuse, ohne die Zellen, veranschaulicht.

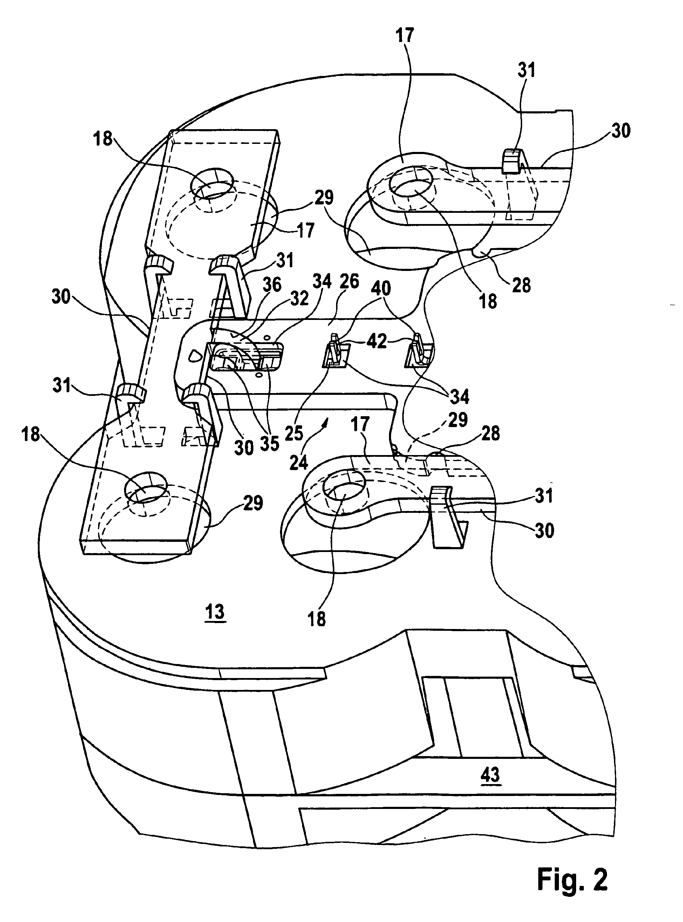

Ein etwa Traktionszwecken dienender Akkumulator 11 stellt eine Zusammenschaltung mehrerer Zellen 12 in gegenseitiger Serien- und/oder Parallelschaltung dar. Dafür sind die Zellen 12 in einem entsprechend profilierten, etwa haubenförmig im KunststoffSpritzguss gefertigten Gehäuse 13 (vgl. Fig.2) gehaltert, aus dem sie mit ihren beiden zylindrischen Polanschlüssen 14 hervorragen. In die in einer Ebene liegenden freien Stirnflächen 15 der beiden Polanschlüsse 14 einer jeden Zelle 12 öffnen sich mit Innengewinden versehene Sacklöcher 16. Das polaritätsberücksichtigende Zusammenschalten der Zellen 12 erfolgt mittels massiver streifenförmiger Hochstrom-Zellenverbinder 17, die dafür jeweils mit einem Durchgangsloch 18 über einem Sackloch 16 positioniert sind. So kann der Zellenverbinder 17 mittels dessen Durchgangslöcher 18 durchgreifender und in die Sacklöcher 16 eingreifender Gewindebolzen 19 von Schrauben 20 fest mit zugeordneten Polanschlüssen 14 verbunden werden.

Für ein Batteriemanagement 21, das im Interesse der Lebensdauer und Leistungsfähigkeit der Zellen 12 deren Lade- und Entladezyklen steuert und einen Ladungsausgleich der Zellen 12 untereinander regelt, sollen die einzelnen Zellenverbinder 17 in einem handhabungstechnisch möglichst einfachen und irrtumsfreien Montagevorgang betriebszuverlässig über elektrische Leiter an entsprechende Bauelemente 22 und Schaltungen 23 angeschlossen werden. Das wird mittels einer Platine 24 bewerkstelligt, die aus einem Stanzgitter 25 besteht, welches, vor dem endgültigen Auftrennen von der Handhabung dienenden Stabilisierungsbrücken, im Kunststoffspritzguss eine im Wesentlichen flache aber relativ steife und mechanisch hoch belastbare Umhüllung 26 erfährt. Der eigentliche, elektrisch wirksame Leiterbahnenverlauf ergibt sich dann in als solcher bekannter Weise, wenn durch in der Umhüllung 26 freigesparte Öffnungen hindurch die Stabilisierungsbrücken herausgestanzt werden.

Diese Platine 24 wird flach auf dem Gehäuse 13 aufliegend mittels mehrerer zueinander distanziert angeordneter Rasthaken 27 positioniert und fixiert, die vorzugsweise an das Gehäuse 13 angespritzt sind und die Platine 24, durch dafür freigesparte Positionierlöcher 28 hindurch oder längs ihres Außenrandes, übergreifen. Im Übrigen ist die Platine 24 mit derart verlaufenden Berandungen (oder Durchbrechungen) 29 ausgelegt, dass sie die Mantelflächen der Polanschlüsse 14 nicht berührt, also radial lichten Abstand zu jenen einhält.

Jedenfalls im Bereiche des Verlaufes von Zellenverbindern 17 trägt die auf dem Gehäuse 13 aufliegende Platine 24 geringfügig weniger stark, jedenfalls nicht stärker auf, als die lichte Höhe der Polanschlüsse 14. Wenn ein Zellenverbinder 17 auf deren Stirnflächen 15 aufgelegt und mittels der Schrauben 20 gegen diese verspannt wird, erfolgt dadurch deshalb kein sandwichartiges Einklemmen der darunter auf das Gehäuse 13 montierten Platine 24. Die ist und bleibt relativ weich und deshalb mechanisch schonend über die Rasthaken 27 an ihre großflächige Auflage in Form des Gehäuses 13 angeschlossen.

Der auf die Polanschluss-Stirnflächen aufgelegte Zellenverbinder 17 wird vor seinem Verschrauben durch seine Längsränder 30 übergreifende Verrastungen 31 vorpositioniert, die wie die Rasthaken 27 an das Gehäuse 13 angeformt sind aber die Platine 24 unter radialem Spiel durchgreifen.

Die Kontur des Zellenverbinders 17 ist mit wenigstens einer seitlichen Ausladung ausgebildet, vorzugsweise gestanzt, die zu einem Rüssel 32 gebogen wird, der mit seinem vom eigentlichen Zellenverbinder 17 abgelegenen Ende 33 schließlich, aus der Ebene des Zellverbinders 17 heraus, in Richtung quer zur Ebene des Zellenverbinders und auf die Platine 24 zu weist. Beim Eindrücken in die Verrastungen 31 taucht dieses Ende 33 deshalb in die Ebene des Stanzgitters 25 hinein, nämlich in eine Aussparung 34 in dessen Umhüllung 26. In diese Aussparung 34 kragen wenigstens zwei am Stanzgitter 25 freigestanzte Klemmlaschen 35 distanziert aufeinander zu weisend vor. Die werden vom Ende 33 des Rüssels 32 wie skizziert in Einsteckrichtung geringfügig elastisch voneinander fort gebogen und verkanten sich dadurch an den Mantelflächen 36 des Rüssels 32.

Der im Zuge der Vormontage des Zellenverbinders 17 in das Stanzgitter 25 eingreifende Rüssel 32 stellt so einen wünschenswert elastisch nachgiebigen aber zugleich hoch erschütterungsfesten sowohl mechanischen wie auch elektrischen Anschluss des auf einander benachbarten Polanschlüssen 14 verschraubten Zellenverbinders 17 an die Verdrahtung in Form des Stanzgitters 25 dar.

Alternativ ist an der Unterseite des Zellenverbinders 17 ein Dorn angeformt, der - analog dem Rüssel 32 - in das Stanzgitter 25 eingreift.

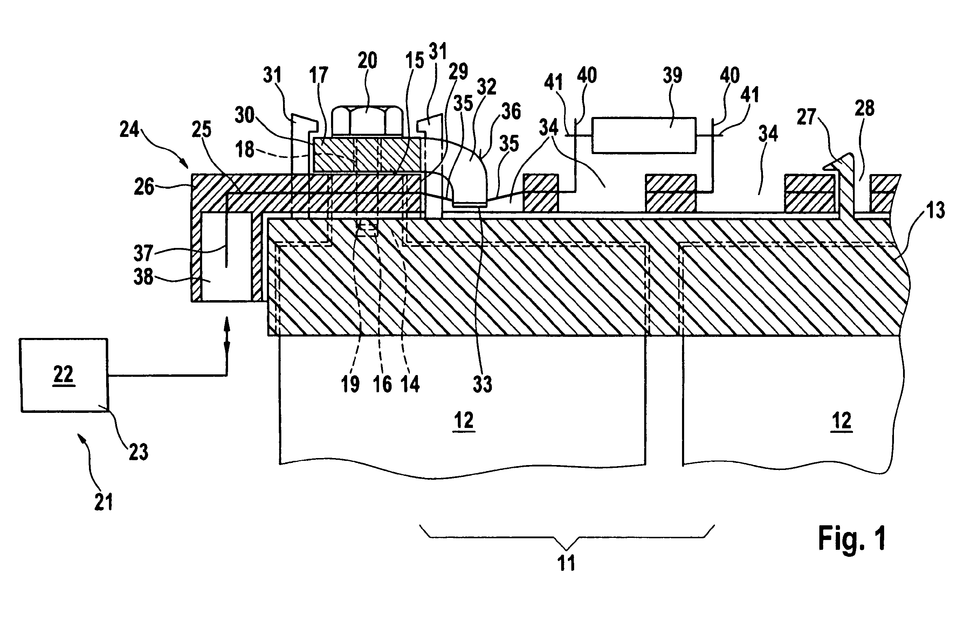

Eine für den Anschluss einer externen Schaltung 23 erforderliche Datenschnittstelle wird zweckmäßigerweise ebenfalls in das Stanzgitter 25 integriert, indem besonders schmal ausgelegte Gitter-Enden, dann als Steckerstifte 37 dienend, im Zuge des Umspritzens des Stanzgitters 25 von einem angespritzten Steckerkorb 38 umgeben werden. Zweckmäßigerweise werden die Steckerstifte 37 wie skizziert in dem Sinne aus der Ebene der Platine 24 heraus gebogen, dass hier eine Steckverbindung im Zuge des Aufrastens der Platine 24 auf das Gehäuse 13 vollzogen werden kann. Entgegen der Prinzipdarstellung der Fig.1 ergibt sich ein besonders gedrängter Aufbau, wenn der Steckerkorb 38 in einen der achsparallelen Gehäuse-Zwickel 43 (vgl. Fig.2) zwischen einander benachbarten Zellen 12 verlegt wird.

Strombedingt größere Leiterquerschnitte für den Anschluss etwa von Widerständen 39 zum Zellenladungsausgleich werden zweckmäßigerweise innerhalb des Stanzgitters 25 durch entsprechend verbreiterte Bahnen realisiert. Eine besonders vorteilhafte Bestückungsmöglichkeit ergibt sich dadurch, dass in Platinen-Aussparungen 34 abseits der Zellenverbinder 17 freigestanzte und dabei stirnseitig mit schmalen V-Einschnitten 42 (vgl. Fig.2) ausgestattete Bahnenenden zu Bestückungsklemmen 40 aus der Ebene der Platine 24 entgegen der Eintauchrichtung des Rüssels 32 herausgebogen werden. In die brauchen dann die Anschlüsse 41 der Bauelemente nur noch in Richtung der Platinenmontage, also gegen die stabilisierende Unterlage des Gehäuses 13 eingedrückt und dadurch zu lötfreier Bestückung verklemmt zu werden.

So erfolgen alle, mechanischen wie elektrischen, Montagevorgänge in derselben Orientierung: Zunächst die Verrastung der Stanzgitter-Platine 24 auf dem Akkumulator-Gehäuse 13 samt Steckvorgang im Korb 38, dann das Eindrücken des Zellenverbinder-Rüssels 32 in das und das Aufdrücken der Bauelementen-Anschlüsse 41 auf das Stanzgitter 25.

Um die auch sehr starke Ströme führenden Zellenverbinder 17 etwa eines Traktions-Akkumulators 11 fehlerresistent und funktionssicher etwa an ein Batteriemanagement 21 anschließen zu können, wird also erfindungsgemäß auf das die Zellen 12 mechanisch gruppierende Gehäuse 13 zunächst eine Platine 24 in Form eines kunststoffumspritzten Stanzgitters 25 aufgerastet, deren Umhüllung 26 in der Nachbarschaft der Zellenverbinder 17 jedenfalls nicht höher als die Stirnflächen 15 der unter lichtem Abstand zur Umhüllung 26 daraus hervorragenden Zellen-Polanschlüsse 14 aufträgt. Bei der Vormontage eines Zellenverbinders 17 auf Polanschlüssen 14 taucht dieser mit einem von ihm abgebogen verlaufenden Rüssel 32 in die Ebene des Stanzgitters 25 ein und verkantet sich dabei zwischen wenigstens zwei aufeinander zu weisenden Klemmlaschen 35, womit unter einer einzigen Montagerichtung der zuverlässige mechanische und elektrische Anschluss der Zellenverbinders 17 an das Stanzgitter 25 der Verdrahtungs-Platine 24 hergestellt ist.

### Bezugszeichenliste

- 11: Akkumulator (aus 12-12)
- 12: Zelle (in 13 gehaltert)
- 13: Gehäuse (von 11)
- 14: Polanschluss (von 12)
- 15: Stirnfläche (von 14)
- 16: Sackloch (in 14)
- 17: Zellenverbinder (über 14-14)
- 18: Durchgangsloch (in 17 über 16)
- 19: Gewindebolzen (in 16)
- 20: Schraube (mit 19)
- 21: Batteriemanagement (für 12-12)
- 22: Bauelement (in 23)
- 23: (externe) Schaltung (an 38)
- 24: Platine (aus 25-26)
- 25: Stanzgitter (in 26)
- 26: Umhüllung (von 25)
- 27: Rasthaken (an 13 für 24)
- 28: Positionierloch (an 24 für 27)
- 29: Berandung/Durchbrechung (an/in 24, gegenüber 14 distanziert)
- 30: Längsrand (von 17)
- 31: Verrastung (zwischen 13 und 17)
- 32: Rüssel (an 17, zwischen 35-35)
- 33: Ende (von 32)
- 34: Aussparung (in 24)
- 35: Klemmlaschen (gegen 32)
- 36: Mantelfläche (von 32)
- 37: Steckerstift (in 38)
- 38: Steckerkorb (um 37)
- 39: Widerstand (auf 40)
- 40: Bestückungsklemme (für 39)
- 41: Anschluss (von 39)
- 42: Einschnitt (in 40 für 41)
- 43: Zwickel (außen an 13, für 38)

## Patentansprüche

1. Anordnung zum Anschließen von elektrischen Leiterbahnen einer Platine (24) an Polanschlüsse (14) von mittels Zellenverbindern (17) zusammengeschalteten Zellen (12) eines Akkumulators, wobei eine unter lichtem Abstand zu den Polanschlüssen (14) gehalterte Platine (24) eine Leiterbahnstruktur in Form eines von einer Umhüllung (26) umspritzten Stanzgitters (25) aufweist, wobei in Form eines Dorns ausgebildete oder zu einem Rüssel (32) gebogene, seitliche Ausladungen der Zellenverbinder (17) in jeweilige Aussparungen (34) in der Umhüllung eingreifen derart, dass ein elastisch nachgiebiger und zugleich hoch erschütterungsfester sowohl mechanischer wie auch elektrischer Anschluss des Zellenverbinders (17) an die Leiterbahnstruktur des Stanzgitters (25) hergestellt wird.

2. Anordnung nach dem vorangehenden Anspruch, **dadurch gekennzeichnet, dass** der vom Zellenverbinder (17) abstehende Rüssel (32) sich in eine Richtung quer zur Ebene des Zellverbinders (17) erstreckt.

3. Anordnung nach einem der vorangehenden Ansprüche, **dadurch gekennzeichnet, dass** der Eingriff zwischen, in einer Aussparung (34) der Umhüllung (26) des Stanzgitters (25) aufeinander zu weisende, Klemmlaschen (35) erfolgt.

4. Anordnung nach einem der vorangehenden Ansprüche, **dadurch gekennzeichnet, dass** die Umhüllung (26) in der Umgebung von Zellenverbindern (17) nicht höher als die Polanschlüsse (14) aufträgt.

5. Anordnung nach einem der vorangehenden Ansprüche, **dadurch gekennzeichnet, dass** die Umhüllung (26) auf einem Gehäuse (13) für eine Gruppierung der Zellen (12) verrastet ist.

6. Anordnung nach dem vorangehenden Anspruch, **dadurch gekennzeichnet, dass** vom Gehäuse (13) entgegen der Einsteckrichtung des Rüssels (32) vorragende Rasthaken (27) die Umhüllung (26) an Positionierlöchern (28) durchgreifen.

7. Anordnung nach einem der beiden vorangehenden Ansprüche, **dadurch gekennzeichnet, dass** auch die Zellenverbinder (17) an dem Gehäuse.(13) verrastet sind.

8. Anordnung nach dem vorangehenden Anspruch, **dadurch gekennzeichnet, dass** die Zellenverbinder (17) mit den Zellen (12) über in Sacklöcher (16) in deren Polanschlüssen (14) eingreifende Schrauben (20) ohne axiale Beanspruchung der Stanzgitter-Umhüllung (26) verbunden sind.

9. Anordnung nach einem der vorangehenden Ansprüche, **dadurch gekennzeichnet, dass** an die Umhüllung (26) ein Steckerkorb (38) angeformt ist, in dem am Stanzgitter (25) freigestanzte Steckerstifte (37) enden.

10. Anordnung nach dem vorangehenden Anspruch, **dadurch gekennzeichnet, dass** die Steckerstifte (37) in gleicher Steckrichtung wie die Rüssel (32) orientiert sind.

11. Anordnung nach einem der vorangehenden Ansprüche, **dadurch gekennzeichnet, dass** aus der Ebene des Stanzgitters (25), aus diesem freigestanzte, Bestückungsklemmen (40) durch Umhüllungs-Aussparungen (34) hindurch abgekantet sind.

12. Anordnung nach dem vorangehenden Anspruch, **dadurch gekennzeichnet, dass** zu lötfreier Montage von Bauelemente-Anschlüssen (41) in den Stirnenden der Bestückungsklemmen (40) V-förmig sich öffnende schmale Kerben freigestanzt sind.

13. Anordnung nach einem der vorangehenden Ansprüche, **dadurch gekennzeichnet, dass** die Montage der Stanzgitter-Umhüllung (26) auf dem Gehäuse (13) in gleicher Richtung wie die Steckrichtung eines Steckerkorbes (38) und die Montagerichtung des Zellenverbinders (17) samt Eindrückrichtung seines Rüssels (32) sowie die Bestückungsrichtung etwa von Widerständen (39) auf der Platine (24) orientiert ist.

## Claims

1. Arrangement for connecting electrical conductors of a circuit board (24) to terminal connections (14) of cells (12), interconnected by means of cell connectors (17), of a rechargeable battery, wherein a circuit board (24) mounted at a clear distance from the terminal connections (14) has a conductor track structure in the form of a leadframe (25) encapsulated by an encapsulation (26) by injection moulding, wherein lateral projections of the cell connectors (17), said projections being embodied in the form of a rod or being bent to form a nozzle (32), engage into respective cutouts (34) in the encapsulation in such a way that an elastically compliant and at the same time highly vibration-proof both mechanical and electrical connection of the cell connector (17) to the conductor track structure of the leadframe (25) is produced.

2. Arrangement according to the preceding claim, **characterized in that** the nozzle (32) projecting from the cell connector (17) extends in a direction transversely with respect to the plane of the cell connector (17).

3. Arrangement according to either of the preceding claims, **characterized in that** the engagement is effected between clamping lugs (35) facing one another in a cutout (34) of the encapsulation (26) of the leadframe (25).

4. Arrangement according to any of the preceding claims, **characterized in that** the encapsulation (26), in the vicinity of cell connectors (17), does not project higher than the terminal connections (14).

5. Arrangement according to any of the preceding claims, **characterized in that** the encapsulation (26) is latched on a housing (13) for grouping of the cells (12).

6. Arrangement according to the preceding claim, **characterized in that** latching hooks (27) protruding from the housing (13) counter to the insertion direction of the nozzle (32) penetrate through the encapsulation (26) at positioning holes (28).

7. Arrangement according to either of the two preceding claims, **characterized in that** the cell connectors (17) are also latched to the housing (13).

8. Arrangement according to the preceding claim, **characterized in that** the cell connectors (17) are connected to the cells (12) by means of screws (20) engaging into blind holes (16) in the terminal connections (14) of said cells, without axial stressing of the leadframe encapsulation (26).

9. Arrangement according to any of the preceding claims, **characterized in that** a plug receptacle (38) is integrally formed onto the encapsulation (26), plug pins (37) stamped free at the leadframe (25) ending in said plug receptacle.

10. Arrangement according to the preceeding claim, **characterized in that** the plug pins (37) are oriented in the same plugging direction as the nozzles (32).

11. Arrangement according to any of the preceding claims, **characterized in that** placement clamps (40) stamped free from the leadframe are bent out from the plane of the leadframe (25) through encapsulation cutouts (34).

12. Arrangement according to the preceding claim, **characterized in that** narrow notches that open in a V-shaped fashion are stamped free for soldering-free mounting of component connections (41) in the ends of the placement clamps (40).

13. Arrangement according to any of the preceding claims, **characterized in that** the placement of the leadframe encapsulation (26) on the housing (13) is oriented in the same direction as the plugging direction of a plug receptacle (38) and the mounting direction of the cell connector (17) together with the pressing-in direction of the nozzle (32) thereof and also the placement direction of, for instance, resistors (39) on the circuit board (24).

## Revendications

1. Agencement pour raccorder des pistes conductrices électriques d'une plaquette (24) à des bornes polaires (14) de cellules (12) d'un accumulateur branchées ensemble au moyen de connecteurs de cellules (17), dans lequel une plaquette (24) retenue à une distance libre par rapport aux bornes polaires (14) présente une structure de pistes conductrices en forme de grille estampée (25) surmoulée avec une gaine (26), des projections latérales des connecteurs de cellules (17) réalisées sous forme de mandrin ou cintrées en forme de museau (32) venant en prise dans des évidements respectifs (34) de la gaine, de telle sorte qu'un raccord du connecteur de cellules (17) à la fois mécanique et électrique, élastiquement flexible et en même temps hautement résistant aux secousses soit créé au niveau de la structure de pistes conductrices de la grille estampée (25).

2. Agencement selon la revendication précédente, **caractérisé en ce que** le museau (32) saillant depuis le connecteur de cellules (17) s'étend dans une direction transversale par rapport au plan du connecteur de cellules (17).

3. Agencement selon l'une quelconque des revendications précédentes, **caractérisé en ce que** l'engagement a lieu entre des pattes de serrage (35) tournées l'une vers l'autre dans un évidement (34) de la gaine (26) de la grille estampée (25).

4. Agencement selon l'une quelconque des revendications précédentes, **caractérisé en ce que** la gaine (26) ne dépasse pas dans l'environnement des connecteurs de cellules (17) plus haut que les bornes polaires (14).

5. Agencement selon l'une quelconque des revendications précédentes, **caractérisé en ce que** la gaine (26) est encliquetée sur un boîtier (13) pour un regroupement des cellules (12).

6. Agencement selon la revendication précédente, **caractérisé en ce que** des crochets d'encliquetage (27) faisant saillie depuis le boîtier (13) dans le sens opposé à la direction d'enfichage du museau (32) traversent la gaine (26) au niveau de trous de positionnement (28).

7. Agencement selon l'une quelconque des deux revendications précédentes, **caractérisé en ce que** les connecteurs de cellules (17) sont également encliquetés sur le boîtier (13).

8. Agencement selon la revendication précédente, **caractérisé en ce que** les connecteurs de cellules (17) sont connectés aux cellules (12) par le biais de vis (20) venant en prise dans des trous borgnes (16) dans leurs bornes polaires (14) sans sollicitation axiale de la gaine (26) de la grille estampée.

9. Agencement selon l'une quelconque des revendications précédentes, **caractérisé en ce qu'**un boîtier de fiches (38) est façonné sur la gaine (26), dans lequel boîtier de fiches se terminent des fiches (37) découpées dans la grille estampée (25).

10. Agencement selon l'une quelconque des revendications précédentes, **caractérisé en ce que** les fiches (37) sont orientées dans la même direction d'enfichage que le museau (32).

11. Agencement selon l'une quelconque des revendications précédentes, **caractérisé en ce que** des pinces de positionnement (40) découpées dans le plan de la grille estampée (25) sont recourbées à travers des évidements (34) de la gaine.

12. Agencement selon la revendication précédente, **caractérisé en ce que**, pour le montage sans soudage de bornes de composants (41), des encoches étroites s'ouvrant en forme de V sont découpées dans les extrémités frontales des pinces de positionnement (40).

13. Agencement selon l'une quelconque des revendications précédentes, **caractérisé en ce que** le montage de la gaine (26) de la grille estampée sur le boîtier (13) est orienté dans la même direction que la direction d'enfichage d'un boîtier de fiches (38) et la direction de montage du connecteur de cellules (17) ainsi que la direction d'enfoncement de son museau (32) ainsi que la direction de garnissage de résistances éventuelles (39) sur la plaquette (24).
